# EUROPÄISCHE PATENTSCHRIFT

(11) **EP 2 499 033 B1**
(45) Veröffentlichungstag und Bekanntmachung des Hinweises auf die Patenterteilung: **26.02.2020**
(21) Anmeldenummer: 10782221.5
(22) Anmeldetag: 09.11.2010
(51) Int. Cl.: B60T 17/00, B01D 46/00, B01D 53/04, B01D 53/26, F15B 21/04

(54) **LUFTAUFBEREITUNGSANLAGE**
AIR TREATMENT SYSTEM
DISPOSITIF DE TRAITEMENT DE L'AIR

(30) Priorität: 11.11.2009 DE 102009052786
(43) Veröffentlichungstag der Anmeldung: 19.09.2012
(73) Patentinhaber: KNORR-BREMSE Systeme für Nutzfahrzeuge GmbH, 80809 München (DE)
(72) Erfinder: SCHÄBEL, Stefan, 80804 München (DE)
(74) Vertreter: Mattusch, Gundula
(86) Internationale Anmeldenummer: PCT/EP2010/067107
(87) Internationale Veröffentlichungsnummer: WO 2011/058006

(56) Entgegenhaltungen:
- EP-A2- 0 234 229
- DE-A1-102006 037 307
- DE-A1-102006 037 311
- DE-A1-102007 046 167

## Beschreibung

Die vorliegende Erfindung betrifft eine Luftaufbereitungsanlage mit einer Trockenmittelpatrone.

Derartige Luftaufbereitungseinrichtungen beziehungsweise Trockenmittelpatronen kommen in Nutzfahrzeugen, insbesondere Lastkraftwagen und Traktoren, zum Einsatz. Diese verfügen häufig über einen oder mehrere Druckluftverbraucher, die mit aufbereiteter Druckluft versorgt werden müssen. Typische Druckluftverbraucher sind beispielsweise ein Druckluftbremssystem, eine Luftfederung oder auch ein Feststellbremssystem. Zum Versorgen des Nutzfahrzeuges mit Druckluft ist eine Druckluftversorgungseinrichtung vorgesehen, die insbesondere über eine Luftaufbereitungsanlage verfügt. Diese Luftaufbereitungsanlage soll insbesondere getrocknete und gereinigte Luft zur Verfügung stellen. Dazu ist eine Luftaufbereitungsanlage in der Regel mit einer Lufttrocknereinrichtung versehen, welche häufig auch über Filtereinrichtungen zum Filtern der Luft verfügt. Um ein leichtes Warten beziehungsweise Ersetzen der Filter und beispielsweise von Trockenmittel zu ermöglichen, wird in der Regel eine Trockenmittelpatrone als Lufttrocknereinrichtung verwendet, die mit der Luftaufbereitungsanlage verbunden oder in diese eingesetzt werden kann. Zum Verbinden der Lufttrocknereinrichtung mit der Luftaufbereitungsanlage wird dabei häufig eine Bajonettverbindung beziehungsweise ein Bajonettverschluss eingesetzt. Dieser verbindet die Lufttrocknereinrichtung mit der Luftaufbereitungsanlage über eine Steck-Dreh-Verbindung. Beispiele für Bajonettverschlüsse zum Verbinden von Trockenmittelpatronen mit Luftaufbereitungsanlagen sind in der DE 10 2006 037 311 A1 beschrieben, auf die hiermit explizit Bezug genommen wird.

Beim Montieren oder Demontieren einer Trockenmittelpatrone auf oder von einer Luftaufbereitungsanlage werden Drehmomente auf verschiedene Komponenten der Luftaufbereitungsanlage und der Trockenmittelpatrone ausgeübt. Wenn beispielsweise ein Bajonettring eines Bajonettverschlusses zum Befestigen der Trockenmittelpatrone an der Luftaufbereitungsanlage verwendet wird, kann durch Drehen des Bajonettrings ein Drehmoment auf das Gehäuse der Luftaufbereitungsanlage, die Trockenmittelpatrone sowie das die Trockenmittelpatrone umgebende Abdeckungsgehäuse ausgeübt werden. Durch die Drehmomente können sich die Komponenten gegeneinander verdrehen, was die Funktionsfähigkeit des Bajonettverschlusses beeinträchtigen und dessen Lebensdauer verringern kann.

Insbesondere kann es vorkommen, dass die vom Bajonettring überdeckten Bajonettnasen der einzelnen Komponenten nicht deckungsgleich übereinander liegen und sich ein nicht optimaler, verzerrter Kraftfluss ergibt, wenn die Luftaufbereitungsanlage mit Druck belastet wird. Ferner können sich beim Demontieren der Trockenmittelpatrone Schwierigkeiten ergeben, wenn die Bajonettnasen nicht deckungsgleich sind, da sich dann der Bajonettring eventuell nur schwer oder gar nicht entfernen lässt. Ein nicht korrekt oder nicht vollständig funktionsfähiger Bajonettverschluss stellt allerdings ein erhebliches Sicherheitsrisiko dar. Darüber hinaus können nicht korrekt orientierte, gegeneinander verdrehte Komponenten einer Trockenmittelpatrone oder einer Luftaufbereitungsanlage zu einer ungleichmäßigen Luftdurchströmung und somit zu einer verringerten Leistung der Luftaufbereitungsanlage führen.

Das Dokument DE 10 2006 037 307 A1 beschreibt eine Druckluftversorgungseinrichtung für ein Nutzfahrzeug und eine Lufttrocknerpatrone, welche ein Gehäuse aufweist. Die Lufttrocknerpatrone kann über einen Bajonettverschluss an einem Ventilgehäuse befestigt werden.

Das Dokument DE 10 2007 046 167 A1 beschreibt eine Luftfilterpatrone für eine Druckluftaufbereitungsanlage mit einem eine Trockenmittelbox umfassenden Behälter. Die Trockenmittelbox kann aus dem Behälter entnommen werden, ohne den Behälter zu zerstören. Es ist beschrieben, dass der Behälter durch einen Bajonettring auf einem Lufttrocknergehäuse arretiert werden kann.

Daher besteht ein Bedarf für eine verbesserte Luftaufbereitungsanlage sowie eine verbesserte Trockenmittelpatrone.

Eine Aufgabe der vorliegenden Erfindung besteht darin, eine Luftaufbereitungsanlage mit verdrehsicheren und gut ausgerichteten Komponenten bereitzustellen.

Die vorliegende Erfindung löst diese Aufgabe mit den Merkmalen der unabhängigen Ansprüche.

Vorteilhafte Ausführungsformen der Erfindung sind in den abhängigen Ansprüchen angegeben.

Es ist eine Trockenmittelpatrone für ein Nutzfahrzeug beschrieben, die ein Trockenmittelpatronengehäuse aufweist, das nach oben durch einen Deckel und nach unten durch ein Trägerelement begrenzt ist. Ferner weist die Trockenmittelpatrone einen Trockenmittelbehälter auf, der in dem Trockenmittelpatronengehäuse aufgenommen ist. Der Trockenmittelbehälter ist formschlüssig mit dem Trockenmittelpatronengehäuse verbunden. Insbesondere kann der Trockenmittelbehälter ein Trockenmittel enthalten. Erfindungsgemäß lassen sich der Trockenmittelbehälter und das Trockenmittelpatronengehäuse auf einfache Weise korrekt zueinander ausrichten, so dass sich eine gewünschte Winkelorientierung ergibt und im Betrieb Luft gleichmäßig hindurchströmen kann. Ferner ist die Herstellung der Trockenmittelpatrone erleichtert, da die formschlüssige Verbindung es ermöglicht, leicht zu erkennen, ob die Komponenten der Trockenmittelpatrone korrekt eingebaut sind. Darüber hinaus ergibt die formschlüssige Verbindung eine Kopplung von Trockenmittelpatronengehäuse und Trockenmittelbehälter, die zu einer besseren Verdrehsicherung dieser Komponenten gegeneinander führt.

Es ist erfindungsgemäß vorgesehen, dass der Trockenmittelbehälter durch mindestens einen in einer Ausnehmung aufgenommenen Zapfen mit dem Trägerelement verbunden ist. Zapfen und zugehörige Ausnehmungen können durch einfache Prozesse bei der Herstellung vorgesehen werden und führen zu einer leicht zu montierenden, zuverlässigen formschlüssigen Verbindung. Darüber hinaus führen nicht korrekt in Ausnehmungen eingeführte Zapfen schnell zu einer Verkippung von Komponenten gegeneinander, so dass sich eine fehlerhafte Montage deutlich bemerkbar macht.

Vorteilhafterweise kann der Trockenmittelbehälter mindestens einen Zapfen aufweisen, der in einer Ausnehmung des Trägerelements aufgenommen ist. Alternativ ist es möglich, dass der Trockenmittelbehälter mindestens eine Ausnehmung aufweist, die einen Zapfen des Trägerelements aufnimmt. Eine weitere Möglichkeit besteht darin, dass der Trockenmittelbehälter Zapfen und Ausnehmungen aufweist, die mit zugeordneten Zapfen und Ausnehmungen des Trägerelementes zusammenwirken. Eine solche Kombination ergibt eine besonders gute und stabile formschlüssige Verbindung.

Bei einer Weiterbildung ist vorgesehen, dass der Trockenmittelbehälter einen Trockenmitteldeckel aufweist, der formschlüssig mit dem Deckel verbunden ist. Somit sind die oberen Komponenten miteinander gekoppelt. Besonders vorteilhaft ist es, wenn der Trockenmittelbehälter sowohl in seinem Deckelbereich mit dem Deckel des Trockenmittelpatronengehäuses als auch in seinem unteren Bereich mit dem Trägerelement formschlüssig verbunden ist. Dadurch wird eine interne Verdrehung von Komponenten der Trockenmittelpatrone vermieden.

Insbesondere kann vorgesehen sein, dass der Trockenmitteldeckel mindestens eine Trockenmitteldeckelrippe umfasst, die formschlüssig mit mindestens einer Deckelrippe des Deckels verbunden ist. Dabei kann der Trockenmitteldeckel zweckmäßigerweise mehr als eine Trockenmitteldeckelrippe aufweisen. Eine Rippenkonstruktion erlaubt eine stabile Bauweise und ermöglicht gleichzeitig eine Luftdurchströmung. Es ist dabei besonders vorteilhaft, wenn eine Trockenmitteldeckelrippe zwischen zwei Deckelrippen aufgenommen ist. Die Deckelrippen bilden somit eine Art Führung für die Trockenmitteldeckelrippe, die einerseits einen korrekten Einbau ermöglicht und erfordert. Andererseits ergibt sich eine Kopplung der Rippen bei einer Verdrehung. Selbstverständlich ist es analog möglich, dass eine Deckelrippe zwischen zwei Trockenmitteldeckelrippen aufgenommen ist. Auch eine Kombination derartiger Rippenanordnungen kann zweckmäßig sein.

Es ist besonders vorteilhaft, wenn die Deckelrippen und die Trockenmitteldeckelrippen in einer axialen Richtung im Wesentlichen übereinander liegen. Somit verdecken sich die Rippen zumindest teilweise und ermöglichen einen größeren Querschnitt für eine Luftdurchströmung. Sollten auch im Bereich des Trägerelements Rippen eingesetzt werden, ist es besonders zweckmäßig, wenn sich auch diese Rippen mit den Deckelrippen und den Trockenmitteldeckelrippen in axialer Richtung überdecken.

Bei einer besonders bevorzugten Ausführungsform weist die Trockenmittelpatrone mindestens eine Ausnehmung zur Aufnahme eines Zapfens eines Gehäuses einer Luftaufbereitungsanlage eines Nutzfahrzeugs auf. Vorteilhafterweise umfasst die Trockenmittelpatrone mindestens zwei Ausnehmungen mit unterschiedlichem Querschnitt zur Aufnahme von Zapfen eines Gehäuses einer Luftaufbereitungsanlage eines Nutzfahrzeugs auf. Zweckmäßigerweise sind die Zapfen derart ausgebildet, dass ihre Querschnitte den Querschnitten der Ausnehmungen entsprechen. Die Trockenmittelpatrone kann auch einen oder mehrere Zapfen aufweisen, die zur Aufnahme in Ausnehmungen des Gehäuses vorgesehen sind, oder mindestens einen Zapfen und mindestens eine Ausnehmung aufweisen. Durch die Zapfen und die zugeordneten Ausnehmungen ergibt sich eine Verdrehsicherung des Gehäuses gegenüber der Trockenmittelpatrone. Durch die unterschiedlichen Querschnittsformen lässt sich eine Montage der Trockenmittelpatrone am Gehäuse in einer gewünschten Winkelausrichtung sicherstellen.

Die Erfindung umfasst auch eine Luftaufbereitungsanlage für ein Nutzfahrzeug mit einer oben beschriebenen Trockenmittelpatrone.

Die Erfindung betrifft eine Luftaufbereitungsanlage für ein Nutzfahrzeug nach Anspruch 1, mit einem Gehäuse, einer Trockenmittelpatrone, die mit dem Gehäuse verbunden oder verbindbar ist, und mit einem Abdeckungsgehäuse zum Abdecken der Trockenmittelpatrone. Das Abdeckungsgehäuse ist formschlüssig mit der Trockenmittelpatrone verbunden oder verbindbar. Insbesondere kann das Abdeckungsgehäuse separat von der Trockenmittelpatrone ausgebildet sein und erst bei Montage der Trockenmittelpatrone derart montiert werden, dass es einen vom Gehäuse freistehenden Teil der Trockenmittelpatrone abdeckt und schützt. Die formschlüssige Verbindung zwischen Trockenmittelpatrone und Abdeckungsgehäuse erleichtert eine korrekte Montage und führt zu einer Kopplung von Abdeckungsgehäuse und Trockenmittelpatrone bei Drehbewegungen, so dass eine Verdrehung dieser Komponenten gegeneinander bei Einwirkung eines Drehmomentes vermieden werden kann.

Insbesondere kann vorgesehen sein, dass das Abdeckungsgehäuse einen Zapfen aufweist, der in einer Ausnehmung der Trockenmittelpatrone aufgenommen ist. Alternativ kann das Abdeckungsgehäuse eine Ausnehmung aufweisen, in der ein Zapfen der Trockenmittelpatrone aufgenommen ist. Optional kann auch eine Kombination vorgesehen sein, bei der sowohl Abdeckungsgehäuse als auch Trockenmittelpatrone jeweils mindestens einen Zapfen und eine Ausnehmung aufweisen.

Bei einer besonders bevorzugten Ausführungsform ist vorgesehen, dass die Trockenmittelpatrone und das Gehäuse durch einen Bajonettverschluss verbunden oder verbindbar sind. Es können auch die Trockenmittelpatrone, das Gehäuse und das Abdeckungsgehäuse durch einen Bajonettverschluss verbunden oder verbindbar sind. Ein Bajonettverschluss bietet eine gute und zuverlässige Verbindung bei geringer Bauhöhe.

Es ist besonders vorteilhaft, wenn die Trockenmittelpatrone eine Bajonettnase mit einer Ausnehmung zum Aufnehmen eines Zapfens des Abdeckungsgehäuses aufweist. Dies ist zweckmäßig, da bei Verwenden eines Bajonettverschlusses das Abdeckungsgehäuse und die Trockenmittelpatrone in der Regel im Bereich ihrer Bajonettnasen miteinander in Kontakt stehen werden und so schon vorhandene Strukturen zum Anbringen des Zapfens und der Ausnehmung dienen. Darüber hinaus bietet eine Bajonettnase eine vorstehende Struktur, die sich besonders gut zum Anbringen einer Einrichtung zum Herstellen einer formschlüssigen Verbindung eignet.

Die Trockenmittelpatrone und das Gehäuse sind durch mindestens einen in einer Ausnehmung angeordneten Zapfen miteinander verbunden sind. Es ist besonders vorteilhaft, wenn die Trockenmittelpatrone zwei oder mehr Ausnehmungen mit unterschiedlichem Querschnitt aufweist, die dazu ausgebildet sind, entsprechende Zapfen des Gehäuses aufzunehmen. Zweckmäßigerweise sind die Zapfen derart ausgebildet, dass ihre Querschnitte den Querschnitten der Ausnehmungen entsprechen. Die Trockenmittelpatrone kann auch einen oder mehrere Zapfen aufweisen, die zur Aufnahme in Ausnehmungen des Gehäuses vorgesehen sind, oder mindestens einen Zapfen und mindestens eine Ausnehmung aufweisen. Durch die Zapfen und die zugeordneten Ausnehmungen ergibt sich eine Verdrehsicherung des Gehäuses gegenüber der Trockenmittelpatrone. Durch die unterschiedlichen Querschnittsformen lässt sich eine Montage der Trockenmittelpatrone am Gehäuse in einer gewünschten Winkelausrichtung sicherstellen. Insgesamt lässt sich also eine Kopplung und eine damit verbundene Verdrehsicherung des Gehäuses, der Trockenmittelpatrone und des Abdeckungsgehäuses erreichen.

Es ist besonders vorteilhaft, wenn es sich bei der Trockenmittelpatrone um eine Trockenmittelpatrone wie oben beschrieben handelt.

Nun wird die Erfindung beispielhaft anhand der Figuren beschrieben.

Es zeigen:
- Figur 1: einen seitlichen Querschnitt einer Luftaufbereitungsanlage;
- Figur 2: eine Ansicht einer Trockenmittelpatrone von unten;
- Figur 3: eine seitliche Ansicht einer formschlüssigen Verbindung eines Abdeckungsgehäuses mit einer Lufttrocknerpatrone;
- Figur 4: eine Ansicht von unten einer formschlüssigen Verbindung eines Trägerelements mit einem Trockenmittelbehälter; und
- Figur 5: eine seitliche Querschnittsansicht einer formschlüssigen Verbindung eines Trockenmitteldeckels mit einem Deckel einer Trockenmittelpatrone.

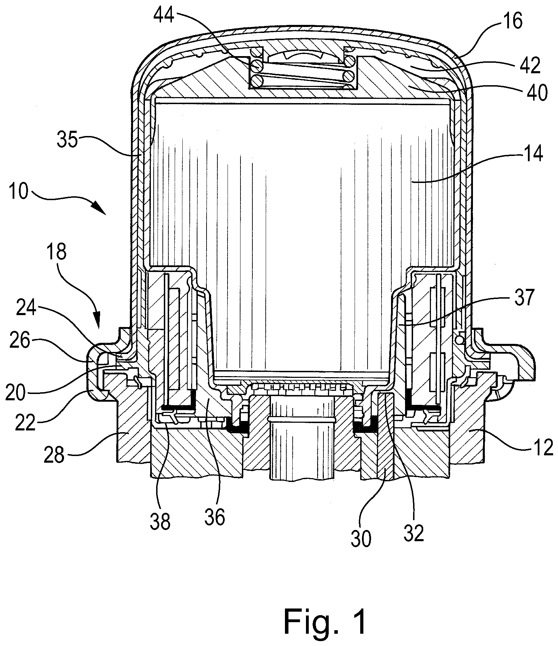

Figur 1 zeigt einen seitlichen Querschnitt einer Luftaufbereitungsanlage. Es ist eine Luftaufbereitungsanlage 10 mit einem Gehäuse 12 gezeigt, auf dem eine Trockenmittelpatrone 14 aufgenommen ist. Die Trockenmittelpatrone 14 wird von oben von einem Abdeckungsgehäuse 16 abgedeckt. Ein Bajonettverschluss 18 mit einem Bajonettring 20 verbindet das Gehäuse 12 der Luftaufbereitungsanlage 10, die Trockenmittelpatrone 14 und das Abdeckungsgehäuse 16 miteinander. Dazu sind in bei dieser Konstruktion in der Zeichnung links und rechts jeweils eine Bajonettnase 22 des Bajonettrings 20, eine Bajonettnase 24 des Abdeckungsgehäuses 16, eine Bajonettnase 26 der Trockenmittelpatrone 14 sowie eine Bajonettnase 28 des Gehäuses 12 vorgesehen, die auf bekannte Art zusammenwirken. Es ist nicht erforderlich, dass wie gezeigt jeweils zwei Bajonettnasen 22, 24, 26, 28 vorhanden sind, stattdessen können auch nur eine oder mehr als zwei Bajonettnasen 22, 24, 26, 28 pro Komponente vorgesehen sein. Auf bekannte Art ist der Ring 20 des Bajonettverschlusses 18 verdrehbar, um die Trockenmittelpatrone 14 und das Abdeckungsgehäuse 16 freizugeben.

Das Gehäuse 12 weist einen Zapfen 30 auf, der in einer passenden Ausnehmung 32 der Trockenmittelpatrone 14 aufgenommen ist. Durch das Zusammenwirken des Zapfens 30 mit der Ausnehmung 32 ist die Trockenmittelpatrone 14 gegen das Gehäuse 12 der Luftaufbereitungsanlage 10 verdrehgesichert. Nicht gezeigt sind ein weiterer Gehäusezapfen sowie eine entsprechende Ausnehmung in der Trockenmittelpatrone, die jeweils unterschiedlich zum Zapfen 30 beziehungsweise der Ausnehmung 32 ausgebildet sind.

Bei dem gezeigten Ausführungsbeispiel sind also zwei derartige Ausnehmungen 32 für Gehäusezapfen 30 vorgesehen, die unterschiedlich ausgebildet sind, so dass sie unterschiedlich ausgebildete Gehäusezapfen 30 aufnehmen. Dadurch lässt sich verhindern, dass die Trockenmittelpatrone 14 falsch auf das Gehäuse 12 aufgesetzt wird. Selbstverständlich lässt sich eine beliebige geeignete Anzahl an Gehäusezapfen und zugehörigen Ausnehmungen verwenden.

Die Trockenmittelpatrone 14 umfasst einen Trockenmittelbehälter 36 sowie ein Trägerelement 38. Im Trockenmittelbehälter 36 sind ein Trockenmittel zum Trocknen der Luft (nicht dargestellt) sowie Filter zum Reinigen der Luft aufgenommen. Ferner sind am Trockenmittelbehälter 36 ringsum verteilt angeordnete Rippen 37 vorgesehen, von denen in der Figur 1 zwei gezeigt sind; die Rippen 37 können in geeigneter Zahl (in dieser Konstruktion sind es 12 Rippen) vorgesehen sein, so dass sie einerseits eine ausreichende Stabilität bieten und andererseits einen Luftstrom nicht zu stark behindern. Am oberen Ende der Trockenmittelpatrone 14 ist ein Trockenmitteldeckel 40 vorgesehen, der den Trockenmittelbehälter 36 nach oben begrenzt. Die Trockenmittelpatrone 14 selbst wird durch einen eigenen Deckel 42 nach oben begrenzt, der sich oberhalb des Trockenmitteldeckels 40 befindet und innerhalb des Abdeckungsgehäuses 16 angeordnet ist. Eine Feder 44 stützt sich am Trockenmitteldeckel 40 ab und spannt den Trockenmittelbehälter 36 zwischen Trägerelement 38 und Deckel 42. Der Trockenmittelbehälter 36 ist also innerhalb eines Trockenmittelpatronengehäuses 35 mit Seitenwänden aufgenommen, das nach oben durch den Deckel 42 und nach unten durch das Trägerelement 38 begrenzt ist. Dabei kann das Trockenmittelpatronengehäuse 35 derart ausgebildet sein, dass es an geeignet gewählten Stellen luftdurchlässig ist, um einen im Betrieb erwünschten Luftstrom zu und von dem Trockenmittelbehälter 36 zu erlauben. Es kann ferner vorgesehen sein, dass die Seitenwände des Trockenmittelpatronengehäuses 35 und der Deckel 42 einstückig ausgebildet sind, etwa indem die Seitenwände laschenartig von dem Deckel 42 abstehen. Die Trockenmittelpatrone 14 umfasst dieses Trockenpatronengehäuse 35 sowie die darin befindlichen Komponenten. Das Abdeckungsgehäuse 16 ist separat davon ausgebildet und dient der Abdeckung, der Abdichtung und dem Schutz der Trockenmittelpatrone 14, wenn diese auf dem Gehäuse 12 der Luftaufbereitungsanlage 10 montiert ist.

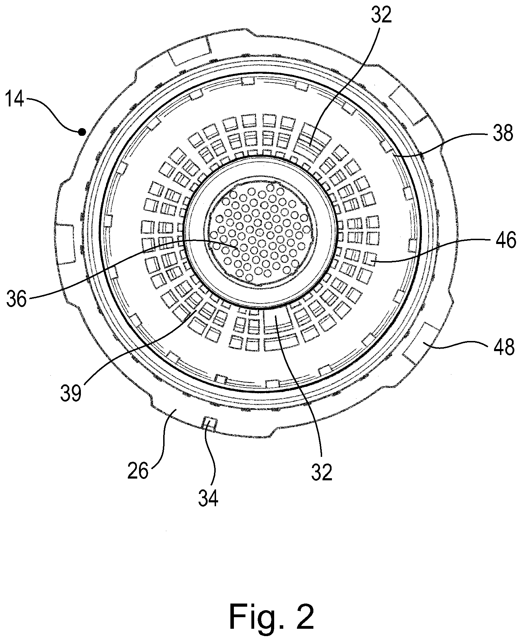

In Figur 2 ist eine Sicht der Trockenmittelpatrone 14 von unten gezeigt. Die außen angeordnete ringförmige Struktur umfasst die Bajonettnasen 26 der Trockenmittelpatrone 14. Es ist ferner eine Ausnehmung 34 in einer der Bajonettnasen 26 zu erkennen, die den Zapfen 50 des Abdeckungsgehäuses 16 aufnimmt. Die anderen Nasen 26 weisen Vertiefungen 48 auf, welche das Demontieren der Trockenmittelpatrone 14 erleichtern, indem sie Platz für ein Werkzeug wie einen Schraubendreher bieten, um die Trockenmittelpatrone 14 aus dem Gehäuse 12 Hebeln zu können.

Das Trägerelement 38 weist Lüftungslöcher 46 und Trägerrippen 39 auf. Ferner sind unterschiedlich ausgebildete Ausnehmungen 32 zur Aufnahme unterschiedlich ausgebildeter Zapfen 30 des Gehäuses 12 vorgesehen. Die etwas hellere Struktur stellt die Unterseite des Trockenmittelbehälters 36 dar, der in dieser Ansicht teilweise durch das Trägerelement 38 verdeckt ist. Wie man sieht, sind Trägerelement 38 und Trockenmittelbehälter 36 zueinander derart winkelorientiert, dass die Rippen 37 des Trockenmittelbehälters 36 und die Trägerrippen 39 direkt übereinander liegen, und so kein unnötiger Luftwiderstand für durchströmende Luft entsteht. Dabei ist es nicht erforderlich, dass die Rippen 37 und 39 in gleicher Zahl vorhanden sind. In der beschriebenen Konstruktion beträgt die Anzahl der Rippen 37 die Hälfte der Anzahl der Trägerrippen 39, was für ausreichende Stabilität des Trockenmittelbehälters sorgt.

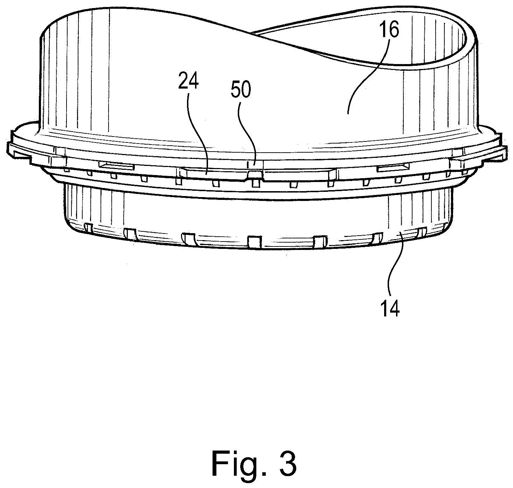

Figur 3 zeigt in einer seitlichen Ansicht, wie das Abdeckungsgehäuse 16 mit der Trockenmittelpatrone 14 verbunden ist. Die Nase 24 des Abdeckungsgehäuses sitzt auf der Nase 26 der Trockenmittelpatrone 14 auf. In die Ausnehmung 34 der Nase 26 ist ein von dem Abdeckungsgehäuse 16 nach unten gerichteter Abdeckungsgehäusezapfen 50 eingesetzt, der in der Figur 3 die Ausnehmung 34 verdeckt.

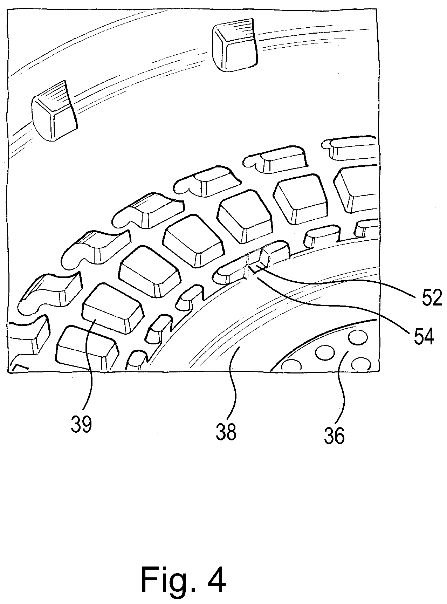

Figur 4 zeigt eine Ausschnittansicht der Trockenmittelpatrone 14 von unten. Deutlich zu erkennen sind die Trägerrippen 39 des Trägerelements 38. Der Trockenmittelbehälter 36 ist oberhalb des Trägerelements 38 angeordnet. Am Trockenmittelbehälter ist ein Behälterzapfen 52 vorgesehen, der in eine Trägerausnehmung 54 des Trägerelements eingepasst ist. Dadurch ist gewährleistet, dass Trägerelement 38 und Trockenmittelbehälter 36 formschlüssig miteinander verbunden und korrekt zueinander ausgerichtet sind, da sich diese Komponenten ansonsten bei Zusammenbau nicht oder nur zueinander deutlich verkippt zusammenfügen lassen. Schon bei der Herstellung der Trockenmittelpatrone 14 ist daher für eine korrekte Winkelausrichtung des Trägerelements 38 und des Trockenmittelbehälters 36 gesorgt. Es können mehrere Behälterzapfen und zugehörige Trägerausnehmungen vorgesehen sein, die zweckmäßigerweise jeweils unterschiedlich ausgebildet sind, um eine eindeutige Orientierung von Trockenmittelbehälter 36 und Trägerelement 38 zu gewährleisten.

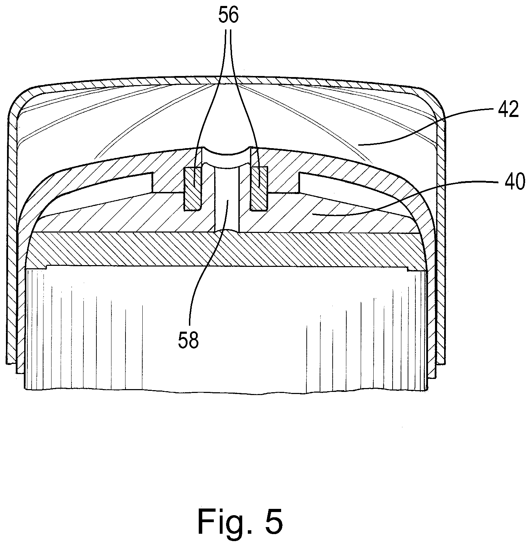

Figur 5 zeigt einen seitlichen Querschnitt des oberen Deckelbereichs der Trockenmittelpatrone 14. Der Deckel 42 und der Trockenmitteldeckel 40 sind ebenfalls formschlüssig miteinander verbunden, so dass sich eine genau definierte Winkelorientierung zwischen Deckel 42 und Trockenmitteldeckel 40 ergibt. Es sind dazu Trockenmitteldeckelrippen 58 am Trockenmitteldeckel 40 vorgesehen, von denen eine gezeigt ist. Andererseits verfügt der Deckel 42 über nach unten in Richtung des Trockenmitteldeckels 44 vorstehende Deckelrippen 56, von denen jeweils zwei jeweils eine Trockenmitteldeckelrippe 58 umgeben. Zwischen einer Trockenmitteldeckelrippe 58 und den zugehörigen Deckelrippen 56 besteht etwas Spiel, um die Montage des Deckels 42 auf den Trockenmitteldeckel 40 zu erleichtern. Durch diese Rippenanordnung befinden sich Deckel 42 und Trockenmitteldeckel 40 in der gewünschten Orientierung zueinander. Ferner lässt sich bei der Montage die gewünschte Orientierung leicht einstellen und es ist leicht festzustellen, wenn die gewünschte Orientierung nicht vorliegt, da dann die vorstehenden Rippen für eine Verkippung der Komponenten gegeneinander sorgen. Bei dieser Konstruktion sind 12 Trockenmitteldeckelrippen 58 vorgesehen, aber es ist jede geeignete andere Zahl von Trockenmitteldeckelrippen 58 vorstellbar.

Die Zapfen 30, 50 und Ausnehmungen 32, 34 der beschriebenen Konstruktion wirken derart zusammen, dass das Gehäuse 12, die Trockenmittelpatrone 14 und das Abdeckungsgehäuse 16 verdrehsicher miteinander verbunden sind. Wenn der Bajonettring 20 nämlich entweder zum Demontieren aus der Stellung verdreht wird, in der er die Komponenten Gehäuse 12, Trockenmittelpatrone 14 und Abdeckungsgehäuse 16 miteinander verbindet, oder zum Montieren dieser Komponenten in die andere Richtung verdreht wird, stützen sich die Komponenten Abdeckungsgehäuse 16, Trockenmittelpatrone 14 und Gehäuse 12 über den mit der Ausnehmung 32 in Eingriff stehenden Zapfen 30 und den mit der Ausnehmung 34 in Eingriff stehenden Abdeckungsgehäusezapfen 50 gegeneinander ab und werden daher von der Drehbewegung des Bajonettrings nicht mitgenommen. Somit wird verhindert, dass sich diese Komponenten gegeneinander verdrehen.

Die durch Zapfen und Ausnehmungen hergestellte formschlüssigen Verbindungen des Trockenmittelbehälter 36 mit dem Trägerelement 38 einerseits und über den Trockenmitteldeckel 40 mit dem Deckel 42 andererseits wirken ebenfalls einer Verdrehung dieser Komponenten gegeneinander entgegen. Ferner sind sie schon bei Herstellung der Trockenmittelpatrone leicht derart zu montieren, dass sie die korrekte Orientierung zueinander aufweisen, das heißt sie verfügen über eine genau definierte Winkelausrichtung zueinander. Dadurch wird erreicht, dass die Komponenten optimal zueinander ausgerichtet sind, um bei Betrieb der Luftaufbereitungsanlage eine möglichst gleichmäßige Durchströmung durch Luft zu erreichen. Dadurch ergibt sich eine verbesserte Trocknungsleistung. Insbesondere lässt sich durch die formschlüssigen Verbindungen erreichen, dass sich Deckelrippen 56, Trockenmitteldeckelrippen 58, Rippen 37 und Trägerrippen 39 in axialer Richtung im wesentlichen überdecken, was den Strömungswiderstand der Trockenmittelpatrone 14 verringert und unerwünschte Verwirbelungen einer Luftströmung vermeidet.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Luftaufbereitungsanlage
- 12: Gehäuse
- 14: Trockenmittelpatrone
- 16: Abdeckungsgehäuse
- 18: Bajonettverschluss
- 20: Bajonettring
- 22: Bajonettnase
- 24: Bajonettnase
- 26: Bajonettnase
- 28: Bajonettnase
- 30: Gehäusezapfen
- 32: Ausnehmung
- 34: Ausnehmung
- 35: Trockenmittelpatronengehäuse
- 36: Trockenmittelbehälter
- 37: Rippe
- 38: Trägerelement
- 39: Trägerrippe
- 40: Trockenmitteldeckel
- 42: Deckel
- 44: Druckfeder
- 46: Lüftungslöcher
- 48: Vertiefung
- 50: Abdeckungsgehäusezapfen
- 52: Behälterzapfen
- 54: Trägerausnehmung
- 56: Deckelrippe
- 58: Trockenmitteldeckelrippe

## Patentansprüche

1. Luftaufbereitungsanlage (10) für ein Nutzfahrzeug, mit
- einem Gehäuse (12);
- einer Trockenmittelpatrone (14), die mit dem Gehäuse (12) verbunden oder verbindbar ist;
- einem Abdeckungsgehäuse (16) zum Abdecken der Trockenmittelpatrone (14);
- wobei das Abdeckungsgehäuse (16) formschlüssig mit der Trockenmittelpatrone (14) verbunden oder verbindbar ist, die Trockenmittelpatrone (14) und das Gehäuse (12) durch mindestens einen in einer Ausnehmung (32) angeordneten Zapfen (30) miteinander verbunden sind,
**dadurch gekennzeichnet, dass**
das Abdeckgehäuse (16) einen Zapfen (50) aufweist, der in einer Ausnehmung (34) der Trockenmittelpatrone (14) aufgenommen ist.

2. Luftaufbereitungsanlage nach Anspruch 1, wobei das Abdeckungsgehäuse (16) eine Ausnehmung aufweist, in der ein Zapfen der Trockenmittelpatrone (14) aufgenommen ist.

3. Luftaufbereitungsanlage nach Anspruch 1 oder Anspruch 2, wobei die Trockenmittelpatrone (14) und das Gehäuse (12) durch einen Bajonettverschluss (18) verbunden oder verbindbar sind.

4. Luftaufbereitungsanlage nach einem der Ansprüche 1 bis 3, wobei die Trockenmittelpatrone (14), das Gehäuse (12) und das Abdeckungsgehäuse (16) durch einen Bajonettverschluss (18) verbunden oder verbindbar sind.

5. Luftaufbereitungsanlage nach einem der Ansprüche 1 bis 4, wobei die Trockenmittelpatrone (14) eine Bajonettnase (26) mit einer Ausnehmung (34) zum Aufnehmen eines Zapfens (50) des Abdeckungsgehäuses (16) aufweist.

6. Luftaufbereitungsanlage nach Anspruch 1, wobei die Trockenmittelpatrone (14) zwei oder mehr Ausnehmungen (32) mit unterschiedlichem Querschnitt aufweist, die dazu ausgebildet sind, entsprechende Zapfen (30) des Gehäuses (12) aufzunehmen.

## Claims

1. Air treatment system (10) for a commercial vehicle, with
- a housing (12);
- a desiccant cartridge (14) which is connected or connectable to the housing (12);
- a covering housing (16) for covering the desiccant cartridge (14);
- wherein the covering housing (16) is connected or connectable positively to the desiccant cartridge (14) and wherein the desiccant cartridge (14) and the housing (12) are connected to each other by a pin (30) located in a recess (32),
**characterised in that**
the covering housing (16) has a pin (50) which is accommodated in a recess (34) of the desiccant cartridge (14).

2. Air treatment system according to claim 1, wherein the covering housing (16) has a recess in which a pin of the desiccant cartridge (14) is accommodated.

3. Air treatment system according to claim 1 or claim 2, wherein the desiccant cartridge (14) and the housing (12) are connected or connectable by a bayonet lock (18).

4. Air treatment system according to any of claims 1 to 3, wherein the desiccant cartridge (14), the housing (12) and the covering housing (16) are connected or connectable by a bayonet lock (18).

5. Air treatment system according to any of claims 1 to 4, wherein the desiccant cartridge (14) has a bayonet lug (26) with a recess (34) for accommodating a pin (50) of the covering housing (16).

6. Air treatment system according to claim 1, wherein the desiccant cartridge (14) has two or more recesses (32) of differing cross-section, which are designed to accommodate corresponding pins (30) of the housing (12).

## Revendications

1. Dispositif (10) de traitement de l'air pour un véhicule utilitaire, comprenant
- un boîtier (12) ;
- une cartouche (14) d'agent dessiccateur, qui est reliée au boîtier (12) ou qui peut l'être ;
- un boîtier (16) de recouvrement pour recouvrir la cartouche (14) d'agent dessiccateur ;
- dans lequel le boîtier (16) de recouvrement est relié à complémentarité de forme à la cartouche (14) d'agent dessiccateur ou peut l'être, la cartouche (14) d'agent dessiccateur et le boîtier (12) étant reliés entre eux par au moins un tenon (30) disposé dans un évidement (32),
**caractérisé en ce que**
le boîtier (16) de recouvrement a un tenon (50), qui est reçu dans un évidement (34) de la cartouche (14) d'agent dessiccateur.

2. Dispositif de traitement de l'air suivant la revendication 1, dans lequel le boîtier (16) de recouvrement a un évidement, dans lequel un tenon de la cartouche (14) d'agent dessiccateur est reçu.

3. Dispositif de traitement de l'air suivant la revendication 1 ou la revendication 2, dans lequel la cartouche (14) d'agent dessiccateur et le boîtier (12) sont reliés par une fermeture (18) à baïonnette ou peuvent l'être.

4. Dispositif de traitement de l'air suivant l'une des revendications 1 à 3, dans lequel la cartouche (14) d'agent dessiccateur, le boîtier (12) et le boîtier (16) de recouvrement sont reliés par une fermeture (18) à baïonnette ou peuvent l'être.

5. Dispositif de traitement de l'air suivant l'une des revendications 1 à 4, dans lequel la cartouche (14) d'agent dessiccateur a un bec (26) de baïonnette ayant un évidement (34) de réception d'un tenon (50) du boîtier (16) de recouvrement.

6. Dispositif de traitement de l'air suivant la revendication 1, dans lequel la cartouche (14) d'agent dessiccateur a deux ou plusieurs évidements (32) de sections transversales différentes, qui sont constitués pour recevoir des tenons (30) correspondants du boîtier (12).
